# EUROPEAN PATENT APPLICATION

(11) **EP 2 824 049 A1**
(43) Date of publication of application: **14.01.2015**
(21) Application number: 14425093.3
(22) Date of filing: 07.07.2014
(51) Int. Cl.: B65G 65/46, F23K 3/14, F23B 30/00, F23B 30/04, F24B 13/04

(54) **Solid fuel heating apparatus**

(30) Priority: 10.07.2013 IT VI20130176
(71) Applicant: CS THERMOS s.r.l., 31020 San Vendemiano - TV (IT)
(72) Inventor: Canzian, Sigismondo, 31020 SAN Vendemiano (TV) (IT)
(74) Representative: Iannone, Carlo Luigi

(57) **Abstract**

A solid fuel heating apparatus and, in particular, a woodchips or wood flakes heating apparatus, comprising a tank (16) of the solid fuel, at least one auger (12, 32), which is provided for picking up the solid fuel from the tank (16) and for falling it in prefixed doses into a combustion brazier, where a forced and adjustable air jet is blowed and where an electrical resistor is placed to perform a flame ignition; according to the invention, the auger (12, 32) is constituted by a tubular element or shaft (26), which has a substantially cylindrical shape and on which is wound, in correspondence of at least one portion of the shaft (26), at least one brush or comb (27), which is spiral-shaped and which is provided with metallic teeth or filaments (29).

## Description

The present invention generally relates to a solid fuel heating apparatus and specifically to a wood heating apparatus.

More particularly, the invention relates to a heater or stove for environments, which uses wood as a solid fuel and which is able to use, in particular, woodchips as a solid fuel, i.e. wood which is broken in flakes or chips with variable size and which is produced starting from trunks and branches by means of so-called chipping machines; woodchips, however, like other wood-cellulosic biomass, constitute a renewable source, as the waste materials are the raw materials for the growth of the original plant species, according to a global closed cycle, and they can also be produced from waste processing of agricultural and forestry or from specific crops.

Many stoves for heating environments are known and said stoves use different types of fuel to feed the flame; moreover, the environment is directly heated by convection or by irradiation.

For example, a wood stove uses wood as fuel and for its operation requires a flue or an exhaust pipe for removing the fumes, while other types of solid fuel stoves employ other materials, such as pellets (derived from the wood scraps, such as the sawdust) and/or biomass (whole or crushed olive pits, pellets vine vineyard, cherry pits, miscanthus pellets, shells of almonds/hazelnuts/pine-nuts, corn, agricultural pellets composed of cereals and wood, etc.).

The above mentioned pellets and/or biomass stoves require a connection to the main supply, automatically operate by means of one or more electrical resistors and have a fuel capacity according to the volume of the fuel tank; they have a forced draft, as a fan located inside the stove is provided for removing the fumes or combustion residues towards the chimney, and they do not release fumes within the environment, as they operate below the atmospheric pressure, possibly by taking the air directly from outside and not from the room where they are installed, so as to obtain a complete thermal insulation.

The heat is radiated into the environment both by natural convection and by forced air through one or more fans that distribute the hot air in the environments next to the environment where the stove is installed; some stoves also have the possibility of channeling the hot air in small pipes, by means of one or more vents to channel the heat to other rooms, while the newer models are equipped with a programmable thermostat in order to automatically schedule the operation times, the speed of the forced hot-air fan and the desired temperature.

Other pellets and/or biomass stoves are provided for heating water to fill radiators; said stoves have heat exchangers, in which water, once heated, is driven for circulating inside radiators.

The fuel tank is usually provided with a top loading and contains the solid fuel to burn; a screw auger is also installed within the tank. The auger is placed within a tubular metal duct and is provided for taking the fuel from the tank and for dragging said fuel inside the brazier of the stove where the fuel is burned (in particular, an electrical resistance becomes glowing in a startup phase and turns on the flame).

In particular, the auger constitutes the solid fuel dispenser, since, by varying its speed, it is possible to calculate with accuracy how much fuel has to be supplied to the brazier in a time unit.

However, especially in the case in which the solid fuel is composed of irregular blocks of wood and/or woodchips or wood flakes, it is difficult, if not impossible, the transport of said solid fuel through the auger, because the transport auger is often jammed or loss of wood occurs, as the woodchips, once accumulated on the auger, enter between the surface of the auger and the inner walls of the tubular duct enclosing said auger, thus falling again inside the tank.

This causes obvious errors in the fuel dosage, since, obviously, it is not possible to calculate with accuracy how much solid fuel is supplied to the brazier in a time unit only by varying the speed and frequency of the auger (screw conveyor).

The present invention is intended to overcome the above mentioned drawbacks of the prior art.

In particular, an object of the present invention is to provide a solid fuel heating appliance, which allows to use woodchips (flakes of wood) as a solid fuel for supplying stoves and/or boilers.

Another object of the present invention is to provide a solid fuel heating appliance, which allows to efficiently perform the load of woodchips as a fuel.

A further object of the present invention is to provide a solid fuel heating appliance, which allows to efficiently preserve environmental resources, which allows to use renewable fuels and which is extremely cheap, as well as simple, to employ.

These and other objects are achieved by a solid fuel heating apparatus according to claim 1 attached hereto; further technical characteristics of the heating apparatus of the invention are included in the dependent claims.

These and other objects and advantages, which will be able to stand out in the following specification, will also be more clear from the following description, which refers to a preferred embodiment of the solid fuel heating apparatus, which is the object of the present invention, and from the attached drawings, in which:
- figure 1A is a partial section view of a solid fuel heating appliance, which employs a solid fuel conveyor, according to the present invention;
- figure 1B is an enlarged view of figure 1A;
- figure 1C is an exploded view of the burner employed in the heating apparatus of figure 1A;
- figure 2 is an exploded view of an auger, equipped with a tubular duct, which is used in the heating apparatus according to the present invention;
- figure 3 is a perspective view of the assembled auger of figure 2, according to the present invention;
- figure 4 shows a series of different assembled augers, which can be used in the solid fuel heating apparatus, according to the invention.

Firstly, it is noted that, although the following description and the enclosed figures relate to a solid fuel heating appliance which use woodchips as fuel, the invention is similarly extensible to any heating appliance, such as a stove or a boiler, which uses wood and, in particular, flakes of wood as fuel or which uses wood and/or biomass (including pellets) as fuel.

With reference to the above mentioned figures, 10 generally indicates a containment enclosure of a solid fuel heating apparatus, according to the present invention, which has side walls 11, a top cover 18 with a compartment 13 for entering the solid fuel and from which a duct portion connecting to the flue protrudes, a base 14 and an inner compartment 15 within which a boiler or burner is housed; the boiler or burner includes a brazier of a combustion chamber 24, where the combustion of the solid fuel occurs, and is coupled with a suction compartment 23 and with a bottom container for collecting ashes and residues produced by combustion of the solid fuel.

At least one electrical resistor 25 is also placed inside the brazier for lighting the flame.

The solid fuel, which is inserted in the heating appliance, is sent into a containment tank 16 and then into the combustion chamber 24; in particular, the solid fuel enters into the brazier of the combustion chamber 24 by means of an auger 12, which is tilted with respect to the vertical axis.

The brazier of the combustion chamber 24 may also be advantageously connected to the tank 16 of the solid fuel by means of a flexible connecting pipe, thus creating a thermal bridge between the combustion chamber 24 and the tank 16, so as to avoid an overheating of said tank 16.

The ignition of the flame occurs by means of at least one electrical resistor 25 and the combustion of the solid fuel inside the brazier of the combustion chamber 24 is maintained by blowing a forced and adjustable air jet coming from outside, through a duct 17 placed behind the heating device, while a tangential fan 19 is employed to force secondary air inside the brazier, thus extracting the combustion products.

The tangential fan 19 is located upstream the brazier if the heating device is constituted by a boiler, while it is located downstream the brazier or in the final portion of the flue, before the discharge fitting, if the heating device is constituted by a stove.

Moreover, the flame of the boiler's brazier develops horizontally, while the flame of the stove's brazier develops first horizontally and then vertically, since it is sucked from the top by the tangential fan 19 (fumes extractor); therefore, the air which is heated inside the brazier flows upward and escapes into the environment, while the combustion gases are sent into a discharge duct or fitting.

The auger 12 which loads the solid fuel from the tank 16 to the combustion chamber 24 of the heating appliance is practically the solid fuel dosing mechanism, as by varying the speed and the frequency of its movement it is possible to calculate with accuracy how much solid fuel is supplied to the brazier for each time unit, in order to adjust all the other operating parameters; alternately to the auger 12, it is also possible to use a horizontal piston, which works with the same principle, even if the use is limited to a few types of stoves and/or solid fuels.

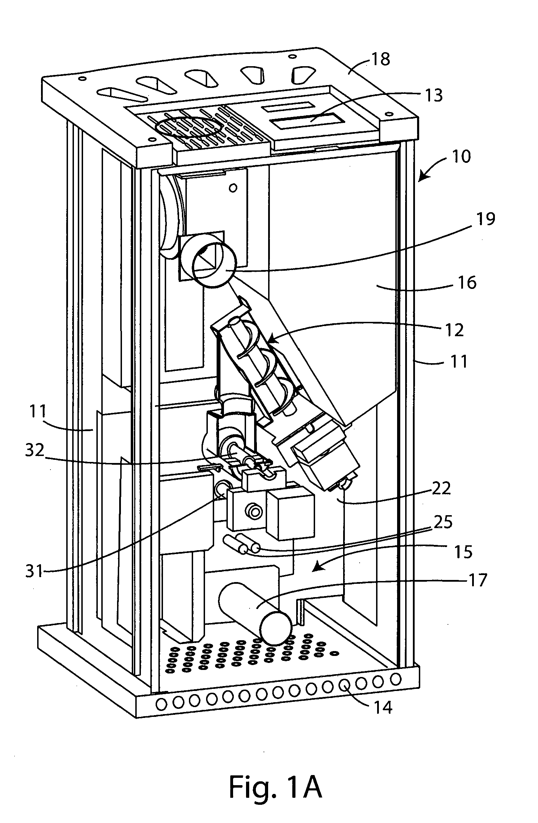

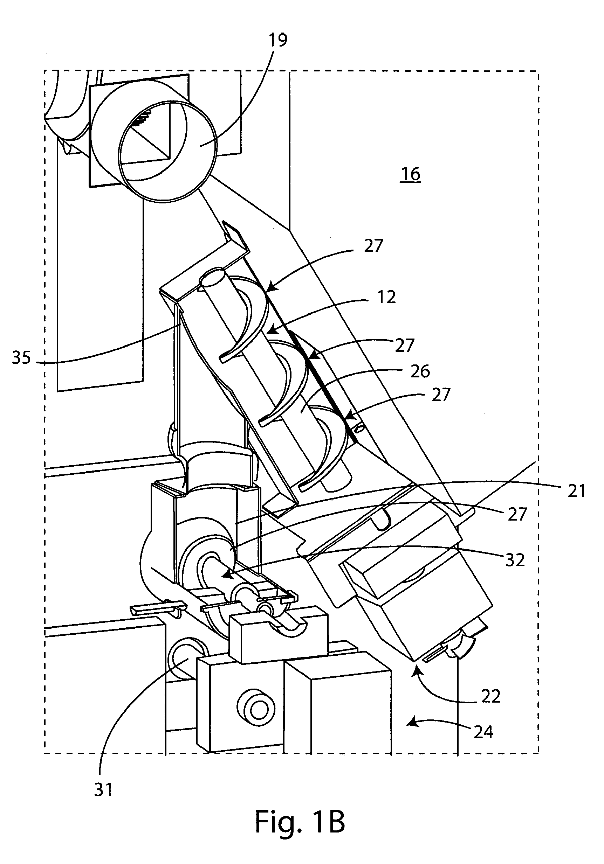

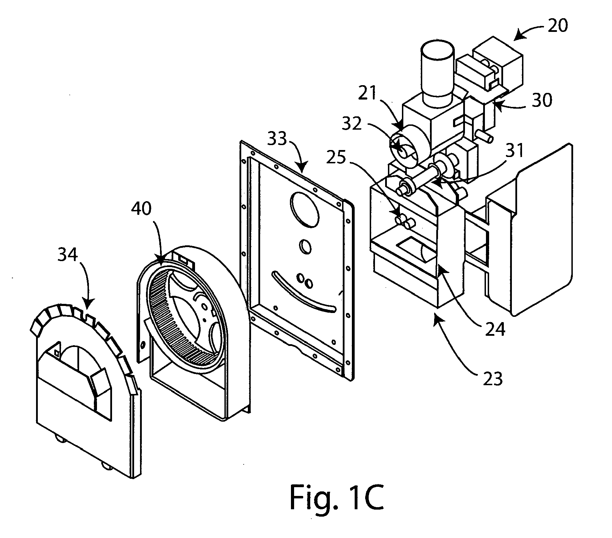

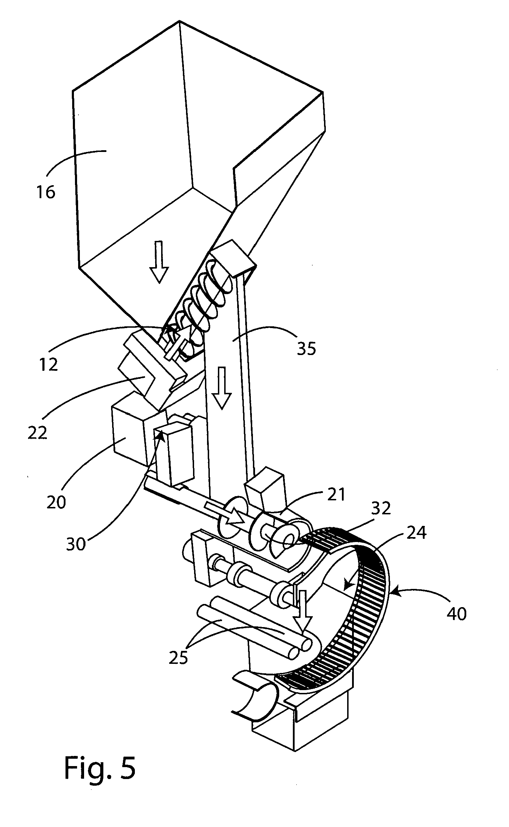

In particular, according to a preferred embodiment of the invention, which is shown in figures 1A, 1B, 1C and 5, a first auger 12 is arranged in a tilted direction with respect to the vertical direction and picks up the solid fuel from the tank 16 and, by means of the motor 22, lets it fall along a vertical pipe or duct 35, while a second horizontal auger 32, placed inside the horizontal duct 21 and activated by a respective motor 20 fixed to a support 30, collects and pushes the solid fuel inside the brazier of the combustion chamber 24. Furthermore, the brazier of the combustion chamber 24 may be constituted by a classical melting pot or it can be constituted by a rotating basket 40, driven by a shaft 31 and bounded by a fixing plate 33 and by an outlet nozzle 34.

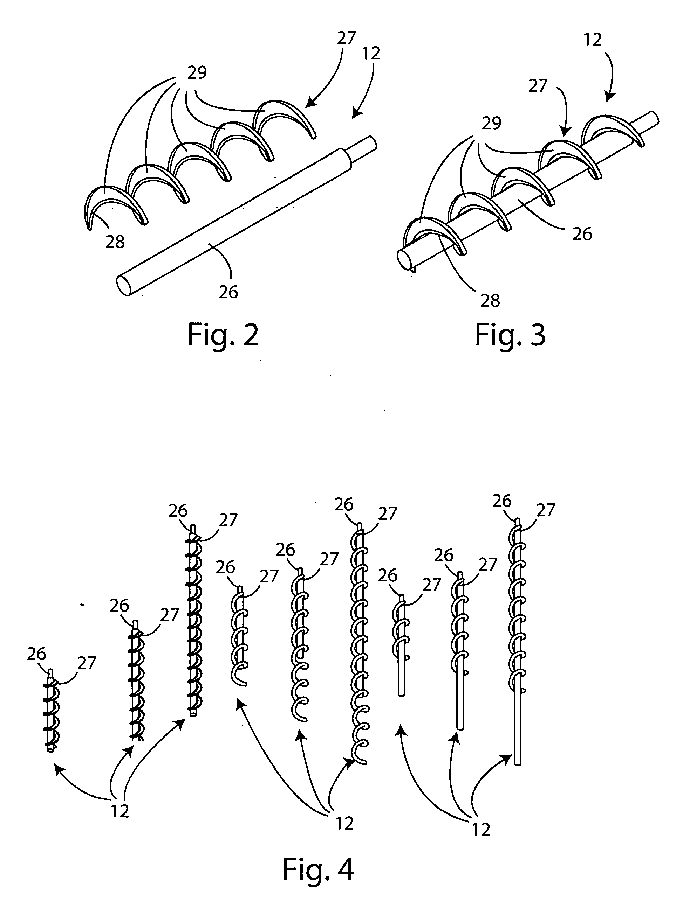

With particular reference to the enclosed figures 2 and 3, according to the present invention, a tubular metal shaft 26 is used as the auger 12 and/or 32; the shaft 26 has a substantially cylindrical shape and at least one brush or comb 27, which is shaped as a spiral, is wounded on said shaft 26.

According to preferred embodiments of the invention, the brush or comb 27, which is spiral-shaped and which is wrapped on the metal shaft 26, is formed by a base strip 28, on which are fixed a series of teeth or metal filaments 29, which allow to effectively collect and transport from the tank 16 to the brazier of the heating appliance every type of solid fuel and, in particular, woodchips (flakes of wood) and/or pellets and/or biomass.

Said teeth or metallic filaments 29 are in fact able to retain and transport the wood flakes or chips, without stopping the movement of the auger 12, 32 and/or without falling within the tank 16.

Finally, the spiral-shaped brush 27 and the shaft 26 can have different lengths, diameters and pitches depending on the type of stove or heating appliance 11 and said brushes 27 may have a vertical development which is equal, greater or less with respect to the shaft 26 (as shown in the enclosed figure 4).

From the above description the technical characteristics of the solid fuel heating apparatus, which is the object of the present invention, are clear as well as the advantages are also clear.

Finally, it is clear that many other variations may be made to the heating appliance of the invention, without departing from the scope of protection of the appended claims, as it is clear that in the practical implementation of the invention, materials, shapes and dimensions of the technical details may be any according to requirements and they can be replaced with other details which are technically equivalent.

## Claims

1. Solid fuel heating apparatus (11), comprising a solid fuel tank (16), at least one auger (12, 32) for picking up the solid fuel from said tank (16) and sending it in prefixed doses into a brazier of a combustion chamber (24), where a forced and adjustable air jet is blowed and where at least one electrical resistor (25) is placed to perform a flame ignition, **characterized in that** said at least one auger (12, 32) comprises a tubular element or shaft (26), which has a substantially cylindrical shape, on which is wound, in correspondence of at least one portion of said shaft (26), at least one spiral-shaped brush or comb (27).

2. Heating apparatus (11) according to claim 1, **characterized in that** said shaft (26) is made of metal.

3. Heating apparatus (11) as claimed in at least one of the preceding claims, **characterized in that** said brush (27) is formed by a base strip (28), on which are fixed a series of teeth or metallic filaments (29), that allow to collect and transport the solid fuel.

4. Heating apparatus (11) as claimed in at least one of the preceding claims, **characterized in that** said solid fuel includes woodchips or wood flakes and/or pellets and/or biomass.

5. Heating apparatus (11) as claimed in at least one of the preceding claims, **characterized in that** said brush (27) has a length, a step and a diameter which vary with the type of said heating apparatus (11).

6. Heating apparatus (11) as claimed in at least one of the preceding claims, **characterized in that** said shaft (26) has a prefixed length and a prefixed diameter.

7. Heating apparatus (11) as claimed in at least one of the preceding claims, **characterized in that** said brush (27) has a length equal, greater or less than the length of said shaft (26).

8. Heating apparatus (11) as claimed in at least one of the preceding claims, **characterized in that** at least one first auger (12) loads the solid fuel, through a vertical duct (35), on a horizontal duct (21) which supports at least one second auger (32), said second auger (32) being provided for collecting the solid fuel and loading it into the combustion chamber (24).

9. Heating apparatus (11) as claimed in at least one of the preceding claims, **characterized in that** said brazier of the combustion chamber (24) is constituted by a classical melting pot or is constituted by a rotating basket (40), driven by a shaft (31) and delimited by a fixing plate (33) and by an outlet nozzle (34).
